# EUROPEAN PATENT APPLICATION

(11) **EP 4 826 134 A1**
(43) Date of publication of application: **21.10.2026**
(21) Application number: 24918644.6
(22) Date of filing: 30.10.2024
(51) Int. Cl.: C25B 9/23, C25B 1/04, C25B 9/00, C25B 11/052, C25B 11/054, C25B 11/056, C25B 11/057, C25B 11/065, C25B 15/08

(54) **ELECTROLYSIS CELL AND ELECTROLYSIS DEVICE**

(30) Priority: 16.01.2024 JP 2024004512
(71) Applicant: Mitsubishi Heavy Industries, Ltd., Chiyoda-ku Tokyo 100-8332 (JP)
(72) Inventor: HASHIMOTO, Tsutomu, Tokyo 100-8332 (JP); FURUKAWA, Shoichi, Tokyo 100-8332 (JP); TAJIMA, Hidehiko, Tokyo 100-8332 (JP); INABA, Kosuke, Tokyo 100-8332 (JP); TAGAMI, Naoto, Tokyo 100-8332 (JP); TSURUMAKI, Shigeru, Tokyo 100-8332 (JP); MUKAI, Daisuke, Tokyo 100-8332 (JP); MIYOSHI, Takahito, Tokyo 100-8332 (JP); SUKENOBU, Takahiro, Tokyo 100-8332 (JP)
(74) Representative: Studio Torta S.p.A.
(86) International application number: PCT/JP2024/038625
(87) International publication number: WO 2025/154357

(57) **Abstract**

An electrolysis cell includes: an ion exchange membrane; a current collector provided on a surface of the ion exchange membrane and made of a plurality of fiber formed into a sheet; a binder layer covering a surface of each of the plurality of fibers; and an electrode catalyst layer containing catalyst particles at least partially protruding from a surface of the binder layer. At least a part of the catalyst particles protrudes from the surface of the binder layer. For this reason, a surface area of exposed portions of the catalyst particles increases, so that a contact area with an electrolyte can be increased.

## Description

### TECHNICAL FIELD

The present disclosure relates to an electrolysis cell and an electrolyzer.

Priority is claimed on Japanese Patent Application No. 2024-004512, filed January 16, 2024, the content of which is incorporated herein by reference.

### BACKGROUND ART

As a device for generating hydrogen, a device that electrolyzes water (an electrolyzer) is known. In this type of device, an electrolysis cell partitioned into a cathode chamber and an anode chamber by an ion exchange membrane is filled with water, and electrolysis of water is performed by supplying electric power to a cathode and an anode. In the cathode chamber, hydrogen is generated by a reaction between water and electrons. Hydroxide ions generated by the reaction pass through the ion exchange membrane and reach the anode chamber. In the anode chamber, oxygen and water are generated from the hydroxide ions. By continuing such reactions, a large amount of hydrogen can be obtained.

On both sides of the ion exchange membrane in a thickness direction, a current collector interposed between the ion exchange membrane and an anode and a current collector interposed between the ion exchange membrane and a cathode are arranged. As a specific example of the current collector, one disclosed in Patent Document 1 is known. In a device according to Patent Document 1, a barrier layer that protects a catalyst material such as platinum is provided on a surface of the current collector. The barrier layer is formed by a polymer binder, a conductive ceramic material, and the like. Accordingly, it is said that early corrosion of the current collector during progress of an electrolysis reaction can be suppressed.

### Citation List

### Patent Document

Patent Document 1: Japanese Patent No. 6430969

### SUMMARY OF INVENTION

### Technical Problem

However, when corrosion resistance is prioritized as described above, there is a problem in that a contact area between the catalyst material and an electrolyte decreases by an amount corresponding to the provision of the barrier layer, and intended electrolysis performance cannot be obtained.

The present disclosure provides an electrolysis cell and an electrolyzer having more favorable electrolysis performance.

### Solution to Problem

An electrolysis cell according to the present disclosure includes an ion exchange membrane, a main body of a current collector, which is provided on a surface of the ion exchange membrane and is made of a plurality of fiber formed into a sheet, a binder layer covering a surface of each of the plurality of fibers, and an electrode catalyst layer containing catalyst particles at least partially protruding from a surface of the binder layer.

An electrolyzer according to the present disclosure includes the above-described electrolysis cell, an electrolyte supply section that supplies an electrolyte to the electrolysis cell, and a power supply section that applies a voltage to the electrolysis cell. Advantageous Effects of Invention

According to the present disclosure, it is possible to provide an electrolysis cell and an electrolyzer having more favorable electrolysis performance.

### BRIEF DESCRIPTION OF DRAWINGS

[FIG. 1] A schematic view representing the configuration of an electrolyzer according to an embodiment of the present disclosure.
[FIG. 2] A schematic cross-sectional view representing the configuration of an electrolysis cell according to an embodiment of the present disclosure.
[FIG. 3] An exploded perspective view representing the configuration of the electrolysis cell according to the embodiment of the present disclosure.
[FIG. 4] An enlarged view of fibers of a cathode catalyst layer according to the embodiment of the present disclosure.
[FIG. 5] An enlarged view of fibers of an anode catalyst layer according to the embodiment of the present disclosure.
[FIG. 6] A schematic view representing a state of catalyst particles in an electrode catalyst layer according to the embodiment of the present disclosure.
[FIG. 7] A graph representing a relationship between a particle diameter and an exposed area of the catalyst particles in the electrode catalyst layer according to the embodiment of the present disclosure.

### DESCRIPTION OF EMBODIMENTS

Hereinafter, an electrolysis cell and an electrolyzer according to embodiments of the present disclosure will be described with reference to the drawings. In the following description, components having the same or similar functions are denoted by the same reference numerals. In the present disclosure, "facing" means that two members overlap each other when viewed in a certain direction, and may include a case where another member (for example, another layer) is present between the two members.

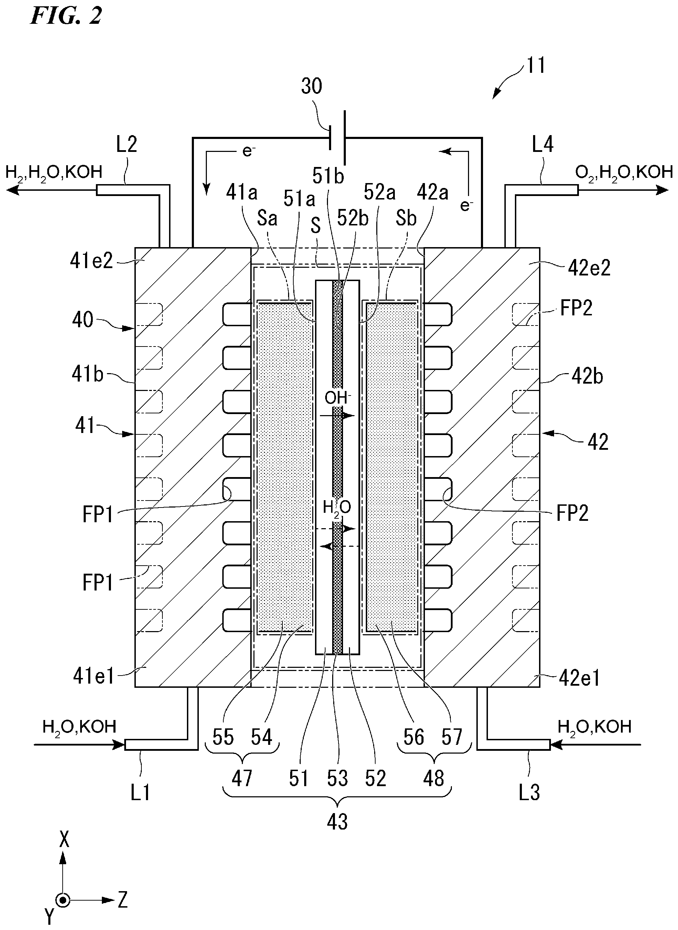

First, a Z direction, an X direction, and a Y direction are defined. The Z direction is a direction from a first separator 41 to a second separator 42, which will be described later. The X direction is a direction intersecting (for example, orthogonal to) the Z direction, and is a direction from a central portion C of a membrane electrode assembly 43, which will be described later, toward one end portion of the membrane electrode assembly 43. The Y direction is a direction intersecting (for example, orthogonal to) the Z direction and the X direction, and is, for example, a depth direction of the drawing sheet in FIG. 2. In the present disclosure, "area" means an area when viewed in the Z direction (that is, an area extending in the X direction and the Y direction). In addition, in the present disclosure, "outer size" means an outer size when viewed in the Z direction. That is, the "outer size" and "area" may mean substantially the same thing, and may be read interchangeably as appropriate.

### <1. Configuration of electrolyzer>

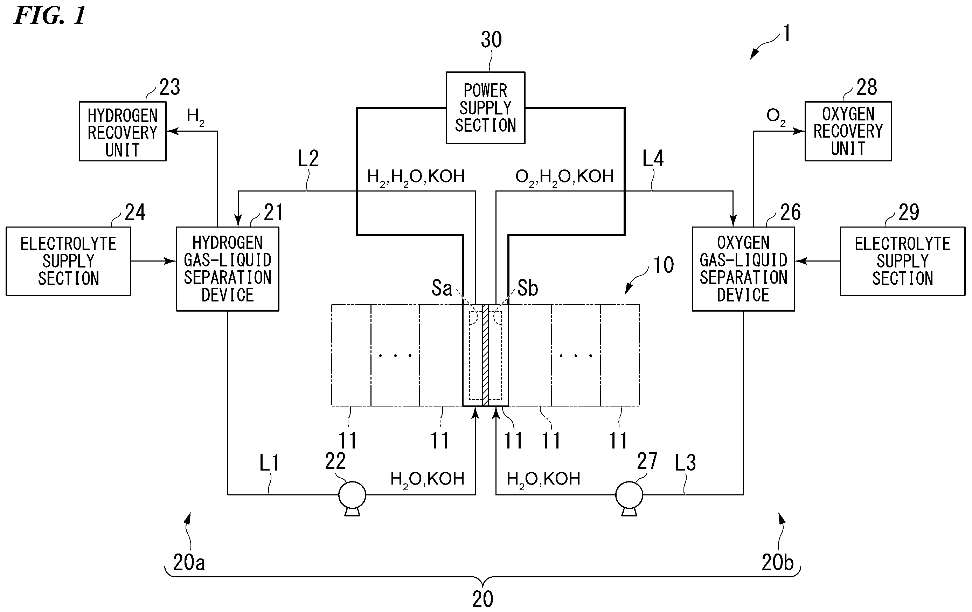

FIG. 1 is a schematic configuration view representing an overall configuration of an electrolyzer 1 according to the present embodiment. The electrolyzer 1 is, for example, a device that generates hydrogen by electrolyzing water contained in an electrolyte. The electrolyzer 1 is, for example, an anion exchange membrane (AEM)-type electrolyzer. However, the electrolyzer 1 is not limited to the above example, and may be a different type of electrolyzer such as a device that electrolytically reduces carbon dioxide.

The electrolyzer 1 includes, for example, an electrolysis cell stack 10, an electrolyte supply section 20, and a power supply section 30.

### (Electrolysis cell stack)

The electrolysis cell stack 10 is an assembly of a plurality of electrolysis cells 11. For example, the electrolysis cell stack 10 is formed by arranging the plurality of electrolysis cells 11 in one direction. Each of the electrolysis cells 11 includes a cathode chamber Sa and an anode chamber Sb. The electrolysis cell 11 will be described later in detail.

### (Electrolyte supply section)

The electrolyte supply section 20 is a supply unit that supplies the electrolyte to each of the electrolysis cells 11. The electrolyte is, for example, pure water or an alkaline aqueous solution. The electrolyte supply section 20 includes a cathode-side supply unit 20a and an anode-side supply unit 20b.

The cathode-side supply unit 20a is a supply unit that supplies the electrolyte to the cathode chamber Sa of each of the electrolysis cells 11. The cathode-side supply unit 20a includes, for example, a hydrogen gas-liquid separation device 21, a first pump 22, a hydrogen recovery unit 23, a first electrolyte supply section 24, and piping lines L1 and L2.

The hydrogen gas-liquid separation device 21 stores the electrolyte. A supply port of the hydrogen gas-liquid separation device 21 is connected to the cathode chamber Sa of the electrolysis cell 11 through the piping line L1. The first pump 22 is provided in the middle of the piping line L1, and sends the electrolyte stored in the hydrogen gas-liquid separation device 21 toward the cathode chamber Sa of the electrolysis cell 11.

A return port of the hydrogen gas-liquid separation device 21 is connected to the cathode chamber Sa of the electrolysis cell 11 through the piping line L2. The electrolyte containing hydrogen generated in the electrolysis cell 11 flows into the hydrogen gas-liquid separation device 21 from the electrolysis cell 11. The hydrogen gas-liquid separation device 21 has a gas-liquid separation section that separates hydrogen contained in the electrolyte. The hydrogen separated from the electrolyte by the hydrogen gas-liquid separation device 21 is recovered by the hydrogen recovery unit 23. The hydrogen gas-liquid separation device 21 is replenished with the electrolyte from the first electrolyte supply section 24.

On the other hand, the anode-side supply unit 20b is a supply unit that supplies the electrolyte to the anode chamber Sb of each of the electrolysis cells 11. The anode-side supply unit 20b includes, for example, an oxygen gas-liquid separation device 26, a second pump 27, an oxygen recovery unit 28, a second electrolyte supply section 29, and piping lines L3 and L4.

The oxygen gas-liquid separation device 26 stores the electrolyte. A supply port of the oxygen gas-liquid separation device 26 is connected to the anode chamber Sb of the electrolysis cell 11 through the piping line L3. The second pump 27 is provided in the middle of the piping line L3, and sends the electrolyte stored in the oxygen gas-liquid separation device 26 toward the anode chamber Sb of the electrolysis cell 11.

A return port of the oxygen gas-liquid separation device 26 is connected to the anode chamber Sb of the electrolysis cell 11 through the piping line L4. The electrolyte containing oxygen generated in the electrolysis cell 11 flows into the oxygen gas-liquid separation device 26 from the electrolysis cell 11. The oxygen gas-liquid separation device 26 has a gas-liquid separation section that separates oxygen contained in the electrolyte. The oxygen separated from the electrolyte by the oxygen gas-liquid separation device 26 is recovered by the oxygen recovery unit 28. The oxygen gas-liquid separation device 26 is replenished with the electrolyte from the second electrolyte supply section 29.

### (Power supply section)

The power supply section 30 is a direct current supply device that applies a voltage to the electrolysis cell 11. The power supply section 30 applies, between an anode and a cathode of the electrolysis cell 11, a direct current voltage necessary for electrolysis of the electrolyte.

### <2. Configuration of electrolysis cell>

### <2.1 Basic structure of electrolysis cell>

Next, the electrolysis cell 11 will be described in detail.

FIG. 2 is a cross-sectional view schematically representing the electrolysis cell 11. The electrolysis cell 11 includes, for example, a first separator 41, a second separator 42, and a membrane electrode assembly 43.

### (First separator)

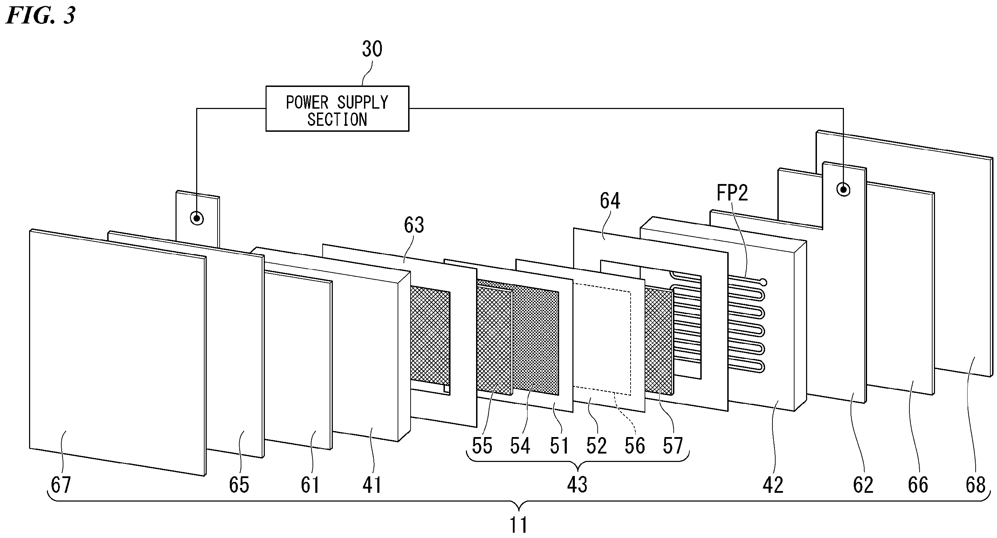

The first separator 41 is a member defining one surface of an internal space S of the electrolysis cell 11. The internal space S is a space including the cathode chamber Sa and the anode chamber Sb, which will be described later. The first separator 41 has, for example, a rectangular plate shape, and is formed of a metal member. For example, a negative voltage is applied to the first separator 41 from the power supply section 30 through a first current collector 61 (see FIG. 3), which will be described later.

The first separator 41 has a first end portion 41e1 (for example, a lower end portion) and a second end portion 41e2 (for example, an upper end portion) positioned on a side opposite to the first end portion 41e1. The above-described piping line L1 is connected to the first end portion 41e1 of the first separator 41. The above-described piping line L2 is connected to the second end portion 41e2 of the first separator 41. The first separator 41 has a first inner surface 41a facing the cathode chamber Sa described later. A first flow path FP1 through which the electrolyte supplied from the piping line L1 flows is formed in the first inner surface 41a. The first flow path FP1 is, for example, a groove provided in the first inner surface 41a. The electrolyte flowing through the first flow path FP1 is discharged to the outside of the electrolysis cell 11 through the piping line L2. Note that each structure (for example, the flow path structure) shown in FIG. 2 is merely an example, and does not limit the content of the present embodiment. For example, as the flow path structure, various structures can be used depending on the size and purpose of the device and an operating environment. The same applies to each structure shown in the other drawings.

### (Second separator)

The second separator 42 is a member disposed with the internal space S left between the second separator 42 and at least a part of the first separator 41, and defining the other surface of the internal space S. The second separator 42 has, for example, a rectangular plate shape, and is formed of a metal member. A positive voltage is applied to the second separator 42 from the power supply section 30 through a second current collector 62 (see FIG. 3), which will be described later. The first separator 41 and the second separator 42 included in the same electrolysis cell 11 form an electrolysis tank 40 of the electrolysis cell 11 as a pair of separators.

The second separator 42 has a first end portion 42e1 (for example, a lower end portion) and a second end portion 42e2 (for example, an upper end portion) positioned on a side opposite to the first end portion 42e1. The above-described piping line L3 is connected to the first end portion 42e1 of the second separator 42. The above-described piping line L4 is connected to the second end portion 42e2 of the second separator 42. The second separator 42 has a second inner surface 42a facing the anode chamber Sb described later. A second flow path FP2 through which the electrolyte supplied from the piping line L3 flows is formed in the second inner surface 42a. The second flow path FP2 is, for example, a groove provided in the second inner surface 42a. The electrolyte flowing through the second flow path FP2 is discharged to the outside of the electrolysis cell 11 through the piping line L4.

Note that, for convenience of explanation, a configuration is described here in which the first inner surface 41a of the first separator 41 has a groove for a flow path (first flow path FP1) and the second inner surface 42a of the second separator 42 has a groove for a flow path (second flow path FP2). However, for example, the first separator 41 of the electrolysis cell 11 included in the electrolysis cell stack 10 (see FIG. 1) may be a bipolar plate having, in addition to the first inner surface 41a, a similar groove for a flow path (first flow path FP1; indicated by a two-dot chain line in FIG. 2) on a surface 41b opposite to the first inner surface 41a. Further, the second separator 42 of the electrolysis cell 11 included in the electrolysis cell stack 10 may be a bipolar plate having, in addition to the second inner surface 42a, a similar groove for a flow path (second flow path FP2; indicated by a two-dot chain line in FIG. 2) on a surface 42b opposite to the second inner surface 42a. Shapes and arrangements of the grooves for flow paths provided on both surfaces of the first separator 41 may be different from each other. In addition, shapes and arrangements of the grooves for flow paths provided on both surfaces of the second separator 42 may be different from each other.

The membrane electrode assembly (MEA) 43 is a structure in which an ion exchange membrane, a catalyst, and a current collector are assembled. The membrane electrode assembly 43 is disposed between the first separator 41 and the second separator 42, and is located in the internal space S. The membrane electrode assembly 43 includes, for example, a first ion exchange membrane 51, a second ion exchange membrane 52, an ionomer layer 53, a cathode catalyst layer 54, and an anode catalyst layer 56.

### (First ion exchange membrane)

The first ion exchange membrane 51 is a membrane that selectively permeates ions. The first ion exchange membrane 51 is, for example, a solid polymer electrolyte membrane. The first ion exchange membrane 51 is, for example, an anion exchange membrane (AEM) having hydroxide ion conductivity. However, the first ion exchange membrane 51 is not limited to the above example, and may be a different type of ion exchange membrane from the above example. The first ion exchange membrane 51 has, for example, a rectangular sheet shape. An outer size of the first ion exchange membrane 51 is smaller than an outer size of the first separator 41 or the second separator 42. The first ion exchange membrane 51 is disposed between the first separator 41 and the second separator 42, and is located in the above-described internal space S. The first ion exchange membrane 51 has a first surface 51a facing the first inner surface 41a of the first separator 41, and a second surface 51b positioned on a side opposite to the first surface 51a. In the internal space S, the cathode chamber Sa is defined between the first surface 51a of the first ion exchange membrane 51 and the first inner surface 41a of the first separator 41.

In the cathode chamber Sa, when a voltage is applied to the electrolysis cell 11, the following chemical reaction occurs, and hydrogen is generated from the electrolyte. In the present application, "XX is generated" may also include a case where another substance is simultaneously generated along with the generation of XX. Hydroxide ions generated in the cathode chamber Sa pass through the membrane electrode assembly 43 and move from the cathode chamber Sa to the anode chamber Sb.

2H₂O + 2e⁻ → H₂ + 2OH⁻ ... (Chem. 1)

### (Second ion exchange membrane)

The second ion exchange membrane 52 is a membrane that selectively permeates ions. The second ion exchange membrane 52 is, for example, a solid polymer electrolyte membrane. The second ion exchange membrane 52 is, for example, an anion exchange membrane having hydroxide ion conductivity. However, the second ion exchange membrane 52 is not limited to the above example, and may be a different type of ion exchange membrane from the above example. The second ion exchange membrane 52 has, for example, a rectangular sheet shape. An outer size of the second ion exchange membrane 52 is smaller than the outer size of the first separator 41 or the second separator 42. For example, the outer size of the second ion exchange membrane 52 is the same as the outer size of the first ion exchange membrane 51. The second ion exchange membrane 52 is disposed between the first separator 41 and the second separator 42, and is located in the above-described internal space S. The second ion exchange membrane 52 has a third surface 52a facing the second inner surface 42a of the second separator 42, and a fourth surface 52b positioned on a side opposite to the third surface 52a. In the internal space S, the anode chamber Sb is defined between the third surface 52a of the second ion exchange membrane 52 and the second inner surface 42a of the second separator 42.

In the anode chamber Sb, when a voltage is applied to the electrolysis cell 11, the following chemical reaction occurs, and oxygen is generated from the electrolyte.

2OH⁻ → 1/2O₂ + H₂O + 2e⁻ ... (Chem. 2)

As a result, when the electrolysis cell 11 is viewed as a whole, the following chemical reaction occurs.

H₂O → H₂ + 1/2O₂ ... (Chem. 3)

In the present disclosure, ordinal numbers such as "first" and "second" added to the names of components are for convenience of explanation. For example, the names "third" and "fourth" do not presuppose that the names "first" and "second" exist for the same member. In the present embodiment, the names "third surface 52a" and "fourth surface 52b" of the second ion exchange membrane 52 do not presuppose that a first surface and a second surface exist in the second ion exchange membrane 52. For this reason, the names "third surface 52a" and "fourth surface 52b" may be read as "first surface 52a" and "second surface 52b" of the second ion exchange membrane 52.

In the present embodiment, the first ion exchange membrane 51 and the second ion exchange membrane 52 are integrated with the second surface 51b of the first ion exchange membrane 51 and the fourth surface 52b of the second ion exchange membrane 52 facing each other. In the present disclosure, the expression "the first ion exchange membrane 51 and the second ion exchange membrane 52 are integrated" is not limited to a case where the first ion exchange membrane 51 and the second ion exchange membrane 52 are directly bonded, and may include a case where another layer (for example, an ionomer layer 53 described later) is present between the first ion exchange membrane 51 and the second ion exchange membrane 52.

Materials for the first ion exchange membrane 51 and the second ion exchange membrane 52 may be the same as or different from each other. For example, the materials for the first ion exchange membrane 51 and the second ion exchange membrane 52 are selected as follows. That is, since an oxidation reaction does not occur in the cathode chamber Sa, the first ion exchange membrane 51 does not need to have high oxidation resistance. Therefore, for example, a membrane made of a material having a higher ion conductivity than a material for the second ion exchange membrane 52 is employed as the first ion exchange membrane 51. On the other hand, since an oxidation reaction occurs in the anode chamber Sb, the second ion exchange membrane 52 preferably has high oxidation resistance. Therefore, for example, a membrane made of a material having higher oxidation resistance than a material for the first ion exchange membrane 51 is employed as the second ion exchange membrane 52.

As an example, the "membrane having high ion conductivity" is a membrane containing a polystyrene-based or tetraphenyl-based composition in a main chain and containing an imidazolium group or a quaternary ammonium group in a side chain. As an example, the "membrane having high oxidation resistance" is a membrane containing a polysulfone-based or bromobutylstyrene-based composition.

### (Ionomer layer)

The ionomer layer 53 is a layer for bonding the first ion exchange membrane 51 and the second ion exchange membrane 52. The ionomer layer 53 is a layer through which the hydroxide ions can pass. The ionomer layer 53 is provided between the second surface 51b of the first ion exchange membrane 51 and the fourth surface 52b of the second ion exchange membrane 52. For example, the ionomer layer 53 is provided over the entire second surface 51b of the first ion exchange membrane 51 and the entire fourth surface 52b of the second ion exchange membrane 52. The thickness of the ionomer layer 53 is, for example, 10 nm or more and 10 µm or less. In the present embodiment, the first ion exchange membrane 51 and the second ion exchange membrane 52 are integrated through the ionomer layer 53.

### (Cathode catalyst layer)

The cathode catalyst layer 54 is a layer that promotes the chemical reaction in the cathode chamber Sa described above. The cathode catalyst layer 54 has, for example, a rectangular sheet shape. In the present embodiment, an outer size of the cathode catalyst layer 54 is smaller than the outer size of the first ion exchange membrane 51. The cathode catalyst layer 54 is disposed in the cathode chamber Sa and is adjacent to the first ion exchange membrane 51. In the present application, "adjacent" is not limited to a case where two members are adjacent to each other independently, and may include a case where at least a part of one of the two members enters the other member. In the present embodiment, the cathode catalyst layer 54 is provided on the first surface 51a of the first ion exchange membrane 51. A negative voltage is applied to the cathode catalyst layer 54 from the power supply section 30 through the first separator 41, and the cathode catalyst layer 54 functions as a part of a cathode 47 of the electrolysis cell 11.

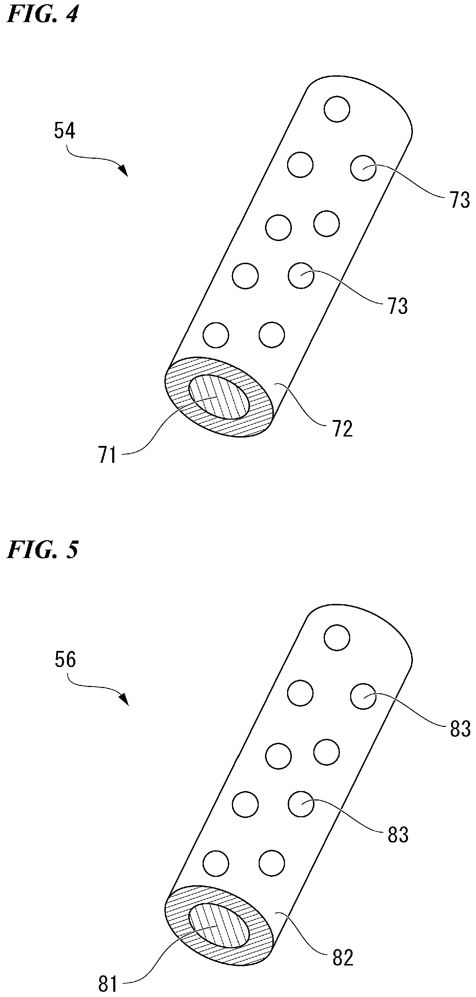

As shown in FIG. 4, the cathode catalyst layer 54 has a cathode current collector 71, a binder layer 72, and cathode catalyst particles 73. The cathode current collector 71 is an electrical connection portion that transmits the voltage applied to the first separator 41 to the cathode catalyst layer 54 itself. The cathode current collector 71 has a mesh shape formed of, for example, carbon fibers. That is, a plurality of carbon forming a fibrous mesh structure to form the cathode current collector 71 having a sheet shape.

A surface of each of these carbon fibers is covered with the binder layer 72. The binder layer 72 is a material for fixing the cathode catalyst particles 73 to the surfaces of the carbon fibers. Specifically, a fluorine-based resin material is preferably used for the binder layer 72. In particular, polytetrafluoroethylene (PTFE (registered trademark)), fluoroethylene vinyl ether (FEVE), or polyvinylidene fluoride (PVdF) is preferably used. This is because these resin materials can maintain adhesiveness between substances, that is, bonding strength, at a high level over a long period of time. In particular, polyvinylidene fluoride exhibits particularly favorable bonding strength in an alkaline environment, and thus is effective when the electrolyte is an alkaline aqueous solution (for example, a potassium hydroxide aqueous solution).

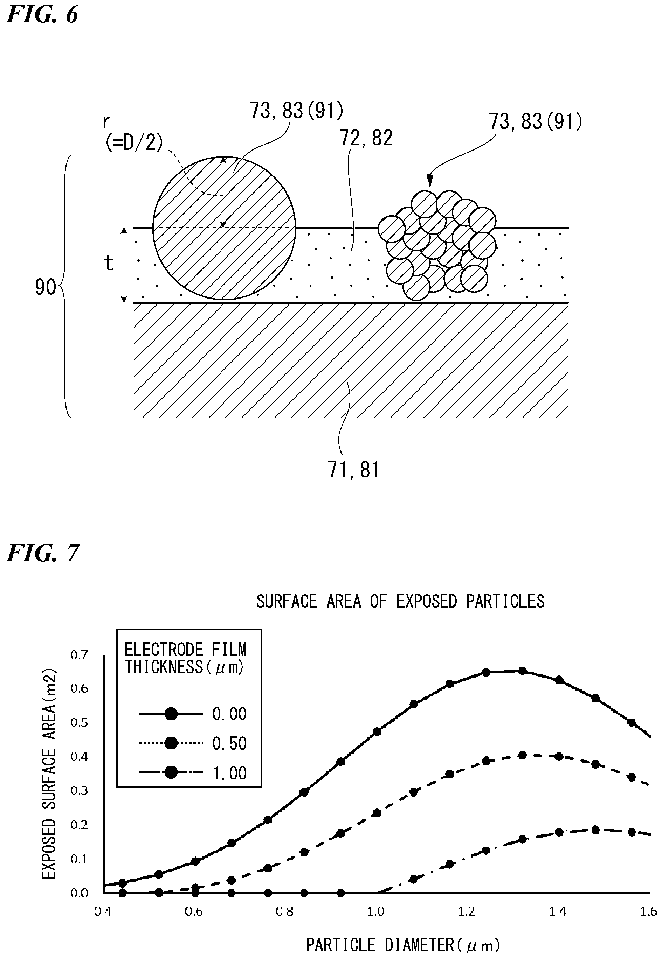

The cathode catalyst particles 73 are fixed to a fiber surface of the cathode current collector 71 by the binder layer 72. Specifically, as shown in FIG. 6, the cathode catalyst particles 73 exist as a single particle or an aggregate of single particles. A large part of each of the cathode catalyst particles 73 protrudes from a surface of the binder layer 72. That is, at least a part of a surface of each of the cathode catalyst particles 73 having a granular shape protrudes further outward than an outer surface of the binder layer 72. As shown in FIG. 6, when a particle diameter of each of the cathode catalyst particles 73 is D (radius: r), a surface area A of a particle exposed from the binder layer 72 having a thickness t is obtained by A = 2πr(2r - t).

However, since an actual particle diameter D of the cathode catalyst particles 73 varies such that 1σ/D is approximately 0.1 to 0.4 with respect to an average particle diameter σ, it is necessary to obtain a total value of the exposed areas by statistical simulation. That is, since a surface area of the catalyst exposed from the binder layer changes due to variations in the particle diameter, it is necessary to statistically calculate what percentage of the total surface area of the cathode catalyst particles 73 is exposed from the binder film. In the case of a catalyst, since 1σ/D varies within a range of approximately 0.1 to 0.4 with respect to the average particle diameter D, the proportion of the surface area of the exposed portions of the cathode catalyst particles 73 to the total surface area (the total surface area of the binder layer 72) is as shown in FIG. 7 as an example of calculation results. Specifically, considering electrolysis performance and service life of the cathode catalyst particles 73, it is desirable that at least the surface area of the cathode catalyst particles 73 exposed from the binder layer 72 is in a range of 20% to 80% of the total surface area. More desirably, the proportion of the surface area is 40% to 60%. Most desirably, the proportion of the surface area is 50%.

The "average particle diameter" mentioned here is a numerical value obtained by, for example, a laser diffraction particle size distribution measurement method. Specific examples of measuring instruments employing this type of method include "SALD series manufactured by Shimadzu Corporation".

In addition, it is desirable that the thickness of the binder layer 72 is 20% to 100% of the average particle diameter. Furthermore, considering the balance between the electrode performance and the service life, it is desirable to cause 40% to 60% of the total surface area to come into contact with the electrolyte. Therefore, it is desirable that the thickness of the binder layer 72 in this case is 40% to 65% of the average particle diameter.

Also when the cathode catalyst particles 73 are aggregates, indicators relating to control of the exposed area are similar to those in the case of the single particles described above. That is, when an aggregate particle diameter is D (radius: r), a surface area A of the aggregate exposed from the binder layer 72 having a thickness t is obtained by A = 2kπr(2r - t). Here, k is a proportionality constant, and is appropriately set depending on the primary particle diameter of the particles and the size of the aggregate.

A material for the cathode catalyst particles 73 includes one or more of nickel, a nickel alloy, cerium oxide, lanthanum oxide, and platinum. Particularly preferably, platinum-supported carbon is used as the cathode catalyst particles 73. In the present disclosure, "XX oxide" may contain another material other than XX and oxygen.

In forming the cathode catalyst layer 54 as described above, for example, a method of immersing the cathode current collector 71 in a slurry containing the cathode catalyst particles 73 and a material forming the binder layer 72 is employed. In this case, by adjusting volume fractions of the cathode catalyst particles 73 and the material forming the binder layer 72, it is possible to cause the cathode catalyst particles 73 to be in a state of being exposed from the surface of the binder layer 72 as described above and to control a ratio of the surface area of the exposed portion within the above-described numerical range.

### (Anode catalyst layer)

The anode catalyst layer 56 is a layer that promotes the chemical reaction in the anode chamber Sb described above. The anode catalyst layer 56 has, for example, a rectangular sheet shape. In the present embodiment, an outer size of the anode catalyst layer 56 is smaller than the outer size of the second ion exchange membrane 52. The anode catalyst layer 56 is disposed in the anode chamber Sb and is adjacent to the second ion exchange membrane 52. For example, a part of the anode catalyst layer 56 may enter a surface portion of the second ion exchange membrane 52. In the present embodiment, the anode catalyst layer 56 is provided on the third surface 52a of the second ion exchange membrane 52. For example, the anode catalyst layer 56 is formed by applying a material for the anode catalyst layer 56 to the third surface 52a of the second ion exchange membrane 52. A positive voltage is applied to the anode catalyst layer 56 from the power supply section 30 through the second separator 42, and the anode catalyst layer 56 functions as a part of an anode 48 of the electrolysis cell 11.

As shown in FIG. 5, the anode catalyst layer 56 has an anode current collector 81, a binder layer 82, and anode catalyst particles 83. The anode current collector 81 is an electrical connection portion that transmits the voltage applied to the second separator 42 to the anode catalyst layer 56 itself. The anode current collector 81 has a mesh shape formed of, for example, stainless steel fibers. That is, a plurality of stainless steel fibers are entangled with each other to form the anode current collector 81 having a sheet shape.

A surface of each of these fibers is covered with the binder layer 82. The binder layer 82 is a material for fixing the anode catalyst particles 83 to the surfaces of the stainless steel fibers. Similarly to the binder layer 72 of the cathode catalyst layer 54, a fluorine-based resin material is preferably used as the binder layer 82. In particular, polytetrafluoroethylene (PTFE (registered trademark)), fluoroethylene vinyl ether (FEVE), or polyvinylidene fluoride (PVdF) is preferably used. This is because these resin materials can maintain adhesiveness between substances, that is, bonding strength, at a high level over a long period of time.

The anode catalyst particles 83 are fixed to a fiber surface of the anode current collector 81 by the binder layer 82. Specifically, as shown in FIG. 6, the anode catalyst particles 83 exist as a single particle or an aggregate of single particles. A large part of the anode catalyst particles 83 protrudes from a surface of the binder layer 82. That is, at least a part of a surface of each of the anode catalyst particles 83 having a granular shape protrudes further outward than an outer surface of the binder layer 82. It is desirable that a proportion of a surface area of an exposed portion of the anode catalyst particles 83 to the total surface area of the binder layer 82 is similar to a numerical range based on the simulation example of the cathode catalyst particles 73 described above. In addition, a method of producing the anode catalyst layer 56 and a method of controlling the exposed area of the anode catalyst particles 83 are similar to the methods described above for the cathode catalyst layer 54.

A material for the anode catalyst particles 83 includes one or more of nickel, a nickel alloy, nickel oxide, copper oxide, iridium oxide, niobium oxide, lead oxide, and bismuth oxide. As described above, in the present disclosure, "XX oxide" may contain another material other than XX and oxygen. For example, "nickel oxide" may contain another material such as iron and cobalt, in addition to nickel and oxygen. In addition, "copper oxide" may contain another material such as cobalt, in addition to copper and oxygen. "Iridium oxide" may contain another material such as ruthenium, in addition to iridium and oxygen. "Lead oxide" may contain another material such as ruthenium, in addition to lead and oxygen. "Bismuth oxide" may contain another material such as ruthenium, in addition to bismuth and oxygen.

In addition, in the above-described cathode catalyst layer 54 and anode catalyst layer 56 (hereinafter, collectively referred to as an electrode catalyst layer 90), since the above-described materials are used as the cathode catalyst particles 73 and the anode catalyst particles 83 (hereinafter, sometimes collectively referred to as catalyst particles 91), these materials have electronic conductivity. Therefore, the binder layers 72 and 82 and the electrode catalyst layer 90 do not contain a conductive additive for supplementing electronic conductivity.

FIG. 3 is an exploded perspective view representing the electrolysis cell 11. The electrolysis cell 11 includes, in addition to the above-described configuration, for example, a first current collector 61, a second current collector 62, a first insulator 63, a second insulator 64, a first insulating member 65, a second insulating member 66, a first end plate 67, and a second end plate 68.

### (First current collector)

The first current collector 61 is an electrical connection portion that transmits a negative voltage applied from the power supply section 30 to the first separator 41. The first current collector 61 is a metallic plate member (for example, a copper plate). For example, the first current collector 61 is in contact with the first separator 41 from a side opposite to the internal space S of the electrolysis cell 11, and is electrically connected to the first separator 41. A negative voltage necessary for electrolysis in the electrolysis cell 11 is applied to the first current collector 61 from the power supply section 30. The first current collector 61 may be shared by two electrolysis cells 11 adjacent to each other in the electrolysis cell stack 10.

### (Second current collector)

The second current collector 62 is an electrical connection portion that transmits a positive voltage applied from the power supply section 30 to the second separator 42. The second current collector 62 is a metallic plate member (for example, a copper plate). For example, the second current collector 62 is in contact with the second separator 42 from a side opposite to the internal space S of the electrolysis cell 11, and is electrically connected to the second separator 42. A positive voltage necessary for electrolysis in the electrolysis cell 11 is applied to the second current collector 62 from the power supply section 30. The second current collector 62 may be shared by two electrolysis cells 11 adjacent to each other in the electrolysis cell stack 10.

### (First insulator)

The first insulator 63 is a member that provides insulation between an outer peripheral portion of the first separator 41 and an outer peripheral portion of the second separator 42. The first insulator 63 is attached to the first inner surface 41a of the first separator 41, and covers an end portion of the first inner surface 41a. A material for the first insulator 63 is not particularly limited as long as the material is an insulating material, and is, for example, a resin having a sheet shape, such as polytetrafluoroethylene (PTFE).

### (Second insulator)

The second insulator 64 is a member that provides insulation between the outer peripheral portion of the first separator 41 and the outer peripheral portion of the second separator 42, similarly to the first insulator 63. The second insulator 64 is attached to the second inner surface 42a of the second separator 42, and covers an end portion of the second inner surface 42a. A material for the second insulator 64 is not particularly limited as long as the material is an insulating material, and is, for example, a resin having a sheet shape such as PTFE. Further, the first insulator 63 and the second insulator 64 may be used as an integrated insulator.

(First insulating member) The first insulating member 65 is located between the first current collector 61 and the first end plate 67. An outer size of the first insulating member 65 is, for example, the same as the outer size of the first current collector 61 or larger than the outer size of the first current collector 61.

### (Second insulating member)

The second insulating member 66 is located between the second current collector 62 and the second end plate 68. An outer size of the second insulating member 66 is, for example, the same as the outer size of the second current collector 62 or larger than the outer size of the second current collector 62.

### (First end plate)

The first end plate 67 is positioned on a side opposite to the first insulating member 65 with respect to the internal space S of the electrolysis cell 11. An outer size of the first end plate 67 is, for example, larger than the outer size of the first insulating member 65.

### (Second end plate)

The second end plate 68 is positioned on a side opposite to the second insulating member 66 with respect to the internal space S of the electrolysis cell 11. An outer size of the second end plate 68 is, for example, larger than the outer size of the second insulating member 66.

The electrolysis cell 11 is not limited to the configuration described above. For example, when a plurality of electrolysis cells 11 are arranged side by side in the electrolysis cell stack 10, two adjacent electrolysis cells 11 among the plurality of electrolysis cells 11 may share the first separator 41 or the second separator 42, each of the first separator 41 and the second separator 42 being a bipolar plate. In this case, a current collector (first current collector 61 or second current collector 62), an insulator (first insulator 63 or second insulator 64), an insulating member (first insulating member 65 or second insulating member 66), and an end plate (first end plate 67 or second end plate 68) need not be present between two adjacent electrolysis cells 11.

### (Operations and Effects)

Here, in manufacturing an electrolysis cell, a method has been proposed in which a layer (barrier layer) that protects a catalyst material such as platinum is provided on a surface of a solid current collector that is not made of a fibrous material. The barrier layer is formed by a polymer binder, a conductive ceramic material, and the like. This is intended to suppress early corrosion of the current collector during progress of an electrolysis reaction. However, when corrosion resistance is prioritized in this way, there has been a problem in that a contact area between the catalyst material and the electrolyte decreases by an amount corresponding to the provision of the barrier layer, and intended electrolysis performance cannot be obtained. In order to solve this problem, the present embodiment employs the above-described configurations.

According to the above-described configurations, at least a part of the catalyst particles 91 protrudes from surfaces of the binder layers 72 and 82. Therefore, the surface area of exposed portions of the catalyst particles 91 increases, so that a contact area with the electrolyte can be increased. Accordingly, it becomes possible to improve electrolysis performance from an initial stage to a final stage of the reaction. In particular, since the catalyst particles 91 are fixed to each of the fibers of the current collector through the binder layers 72 and 82, the electrolyte enters between the fibers, whereby the electrolysis reaction can proceed more stably and efficiently. In this way, performance per electrolysis cell 11 is improved, so that the number of electrolysis cells 11 required for the same amount of hydrogen generated can be reduced. As a result, it is possible to achieve downsizing of the entire electrolyzer 1 and energy savings in a plant.

According to the above-described configurations, the surface area of the protruding portion of the catalyst particles 91 is set to 20% or more and 80% or less with respect to the total surface areas of the binder layers 72 and 82. Accordingly, improvement in electrolysis performance can be achieved while maintaining the holding force of the binder layers 72 and 82 with respect to the catalyst particles 91. Conversely, when the surface area of the catalyst particles 91 exposed from the binder layers 72 and 82 is small, the catalyst particles 91 cannot come into contact with ions through the electrolyte, so that there is a possibility that the electrolysis performance may decrease. According to the above-described configurations, such a possibility can be significantly reduced. In addition, since the surface areas of the binder layers 72 and 82 themselves are also secured to a considerable extent, the holding force for the catalyst particles 91, that is, the service life, can also be extended. Accordingly, the electrolysis cell 11 can continue to be operated stably over a still longer period of time.

According to the above-described configurations, since the catalyst particles 91 have electronic conductivity, it becomes unnecessary to supplement conductivity by means of the binder layers 72 and 82 and the electrode catalyst layer 90. Therefore, it is possible to obtain favorable electrolysis performance without incorporating a conductive additive into the binder layers 72 and 82 and the electrode catalyst layer 90 as a whole. Accordingly, manufacturing costs and maintenance costs of the device can be reduced by an amount corresponding to the omission of the conductive additive. As a result, it is possible to lower the price at which hydrogen, which is a final product generated by the electrolysis reaction, is provided.

Here, while seeking to improve the electrolysis performance of the electrolysis cell 11, there is also an increasing demand for extending the service life of the electrode catalyst layer 90 from a viewpoint of ensuring operability. Therefore, in the present embodiment, a fluorine-based resin material is used for the binder layers 72 and 82. It is known that a resin material containing fluorine has higher adhesive force (bonding force) between objects as compared to other materials. According to the above-described configurations, since the resin material containing fluorine is used as the binder layers 72 and 82, a state in which the current collector and the catalyst particles 91 are strongly bonded to each other by the binder layers 72 and 82 can be maintained. Accordingly, deterioration of the electrolysis cell 11 is avoided, and extension of service life can be achieved. That is, the electrolysis cell 11 can be stably used continuously for a long period of time without being replaced or the like. As a result, it becomes possible to significantly reduce the operating costs of the device as a whole.

Here, among the resin materials containing fluorine, polyvinylidene fluoride is known to have particularly high adhesive force (bonding force) between objects as compared to other fluorine-based resins. According to the above-described configurations, since the resin material containing fluorine is used as the binder layers 72 and 82, a state in which the current collector and the catalyst particles 91 are strongly bonded to each other by the binder layers 72 and 82 can be maintained. In particular, in an environment in which the electrolyte exhibits alkalinity, the adhesive force provided by polyvinylidene fluoride is maintained at an even higher level, which is advantageous as compared to other materials. Accordingly, deterioration of the electrolysis cell 11 is avoided, and extension of service life can be achieved. That is, the electrolysis cell 11 can be stably used continuously for a long period of time without being replaced or the like. As a result, it becomes possible to significantly reduce operating costs of the device as a whole.

### (Other Embodiments)

Although the embodiments of the present disclosure have been described in detail above with reference to the accompanying drawings, the specific configuration is not limited to the embodiments and the present disclosure also includes design changes and the like without departing from the gist of the present disclosure.

For example, materials for the cathode current collector 71 and the anode current collector 81 described in the above embodiments are examples, and any material that is not attacked by hydrogen or oxygen and promotes an oxidation-reduction reaction with the electrolyte can be applied as the cathode current collector 71 or the anode current collector 81.

In addition, although a form in which two ion exchange membranes 120 are bonded together has been described in the above embodiments, an aspect of the ion exchange membrane 120 is not limited thereto. As another example, a configuration in which a catalyst layer and a current collector are provided on both surfaces of one ion exchange membrane 120 may be adopted.

### <Supplementary Note>

The electrolysis cell and the electrolyzer described in each embodiment can be understood, for example, as follows.
(1) An electrolysis cell according to a first aspect includes an ion exchange membrane, a current collector that is provided on a surface of the ion exchange membrane and is made of a plurality of fiber formed into a sheet, a binder layer covering a surface of each of the plurality of fibers, and an electrode catalyst layer containing catalyst particles at least partially protruding from a surface of the binder layer.
   According to the above-described configurations, at least a part of the catalyst particles 91 protrudes from surfaces of the binder layers 72 and 82. Therefore, the surface area of exposed portions of the catalyst particles 91 increases, so that a contact area with the electrolyte can be increased.
(2) An electrolysis cell according to a second aspect is the electrolysis cell of (1), in which a surface area of a portion of the catalyst particles protruding from the surface of the binder layer is 20% or more and 80% or less of a total surface area including the protruding portion and a remaining portion of the binder layer.
   According to the above-described configurations, the surface area of the protruding portion of the catalyst particles 91 is set to 20% or more and 80% or less with respect to the total surface areas of the binder layers 72 and 82. Accordingly, improvement in electrolysis performance can be achieved while maintaining the holding force of the binder layers 72 and 82 with respect to the catalyst particles 91.
(3) An electrolysis cell according to a third aspect is the electrolysis cell of (1) or (2), in which the catalyst particles have electronic conductivity, and the binder layer and the electrode catalyst layer contain no conductive additive.
   According to the above-described configurations, since the catalyst particles 91 have electronic conductivity, it becomes unnecessary to supplement conductivity by means of the binder layers 72 and 82 and the electrode catalyst layer 90. Therefore, it is possible to obtain favorable electrolysis performance without incorporating a conductive additive into the binder layers 72 and 82 and the electrode catalyst layer 90 as a whole.
(4) An electrolysis cell according to a fourth aspect is the electrolysis cell according to any one of aspects (1) to (3), in which the binder layer is formed of a resin material containing fluorine.
   Here, while seeking to improve the electrolysis performance of the electrolysis cell 11, there is also an increasing demand for extending the service life of the electrode catalyst layer 90 from a viewpoint of ensuring operability. Therefore, in the present embodiment, a fluorine-based resin material is used for the binder layers 72 and 82. It is known that a resin material containing fluorine has higher adhesive force (bonding force) between objects as compared to other materials. According to the above-described configurations, since the resin material containing fluorine is used as the binder layers 72 and 82, a state in which the current collector and the catalyst particles 91 are strongly bonded to each other by the binder layers 72 and 82 can be maintained.
(5) An electrolysis cell according to a fifth aspect is the electrolysis cell of (4), in which the binder layer is formed of polyvinylidene fluoride.
   Here, among the resin materials containing fluorine, polyvinylidene fluoride is known to have particularly high adhesive force (bonding force) between objects as compared to other fluorine-based resins. According to the above-described configurations, since the resin material containing fluorine is used as the binder layers 72 and 82, a state in which the current collector and the catalyst particles 91 are strongly bonded to each other by the binder layers 72 and 82 can be maintained. In particular, in an environment in which the electrolyte exhibits alkalinity, the adhesive force provided by polyvinylidene fluoride is maintained at an even higher level, which is advantageous as compared to other materials.
(6) An electrolysis cell according to a sixth aspect includes an ion exchange membrane, a main body of a current collector, which is provided on a surface of the ion exchange membrane and is made of a plurality of fiber formed into a sheet, a binder layer covering a surface of each of the plurality of fibers, and an electrode catalyst layer containing catalyst particles at least partially protruding from a surface of the binder layer, and the binder layer is formed of a resin material containing fluorine.
   Here, while seeking to improve the electrolysis performance of the electrolysis cell 11, there is also an increasing demand for extending the service life of the electrode catalyst layer 90 from a viewpoint of ensuring operability. Therefore, in the present embodiment, a fluorine-based resin material is used for the binder layers 72 and 82. It is known that a resin material containing fluorine has higher adhesive force (bonding force) between objects as compared to other materials. According to the above-described configurations, since the resin material containing fluorine is used as the binder layers 72 and 82, a state in which the current collector and the catalyst particles 91 are strongly bonded to each other by the binder layers 72 and 82 can be maintained.
(7) An electrolysis cell according to a seventh aspect is the electrolysis cell of (6), in which the binder layer is formed of polyvinylidene fluoride.
   Here, among the resin materials containing fluorine, polyvinylidene fluoride is known to have particularly high adhesive force (bonding force) between objects as compared to other fluorine-based resins. According to the above-described configurations, since the resin material containing fluorine is used as the binder layers 72 and 82, a state in which the current collector and the catalyst particles 91 are strongly bonded to each other by the binder layers 72 and 82 can be maintained. In particular, in an environment in which the electrolyte exhibits alkalinity, the adhesive force provided by polyvinylidene fluoride is maintained at an even higher level, which is advantageous as compared to other materials.
(8) An electrolyzer according to an eighth aspect includes the electrolysis cell according to any one of aspects (1) to (7), an electrolyte supply section that supplies an electrolyte to the electrolysis cell, and a power supply section that applies a voltage to the electrolysis cell.

According to the above-described configurations, an electrolyzer having higher electrolysis performance can be provided.

### INDUSTRIAL APPLICABILITY

According to the present disclosure, it is possible to provide an electrolysis cell and an electrolyzer having more favorable electrolysis performance.

### REFERENCE SIGNS LIST

1 Electrolyzer
10 Electrolysis cell stack
11, 11A, 11B Electrolysis cell
20 Electrolyte supply section
30 Power supply section
40 Electrolysis tank
41 First separator
42 Second separator
47 Cathode
48 Anode
51 First ion exchange membrane
51a First surface
51b Second surface
52 Second ion exchange membrane
52a Third surface
52b Fourth surface
53 Ionomer layer
54 Cathode catalyst layer
55 Cathode current collector
56 Anode catalyst layer
57 Anode current collector
71 Cathode current collector
72 Binder layer
73 Cathode catalyst particles
81 Anode current collector
82 Binder layer
83 Anode catalyst particles
90 Electrode catalyst layer
91 Catalyst particles

## Claims

1. An electrolysis cell comprising:
an ion exchange membrane;
a current collector that is provided on a surface of the ion exchange membrane and is made of a plurality of fiber formed into a sheet;
a binder layer covering a surface of each of the plurality of fibers; and
an electrode catalyst layer that comprising catalyst particles at least partially protruding from a surface of the binder layer.

2. The electrolysis cell according to Claim 1, wherein a surface area of a portion of the catalyst particles protruding from the surface of the binder layer is 20% or more and 80% or less of a total surface area including the protruding portion and a remaining portion of the binder layer.

3. The electrolysis cell according to Claim 1 or 2, wherein the catalyst particles have electronic conductivity, and the binder layer and the electrode catalyst layer contain no conductive additive.

4. The electrolysis cell according to Claim 1 or 2, wherein the binder layer is formed of a resin material containing fluorine.

5. The electrolysis cell according to Claim 4, wherein the binder layer is formed of polyvinylidene fluoride.

6. An electrolysis cell comprising:
an ion exchange membrane;
a main body of a current collector, which is provided on a surface of the ion exchange membrane and is made of a plurality of fiber formed into a sheet;
a binder layer covering a surface of each of the plurality of fibers; and
an electrode catalyst layer that comprising catalyst particles at least partially protruding from a surface of the binder layer,
wherein the binder layer is formed of a resin material containing fluorine.

7. The electrolysis cell according to Claim 6, wherein the binder layer is formed of polyvinylidene fluoride.

8. An electrolyzer comprising:
the electrolysis cell according to Claim 1 or 2;
an electrolyte supply section that supplies an electrolyte to the electrolysis cell; and
a power supply section that applies a voltage to the electrolysis cell.
